# EUROPEAN PATENT SPECIFICATION

(11) **EP 0 924 831 B1**
(45) Date of publication and mention of the grant of the patent: **03.11.2004**
(21) Application number: 98102413.6
(22) Date of filing: 12.02.1998
(51) Int. Cl.: H02G 5/06

(54) **Flexible power and signal distribution system**
Flexibles Energie- und Signalverteilungssystem
Système de distribution flexible de puissance et des signaux

(30) Priority: 19.12.1997 IT PC970039
(43) Date of publication of application: 23.06.1999
(73) Proprietor: Vaghini, Alberto, 29100 Piacenza PC (IT)
(72) Inventor: Vaghini, Alberto, 29100 Piacenza PC (IT)
(74) Representative: La Ciura, Salvatore

(56) References cited:
- WO-A-95/01663
- FR-A- 2 355 387
- LU-A- 36 680
- US-A- 3 701 835
- US-A- 3 711 633
- US-A- 5 399 095
- US-A- 5 645 456
- PATENT ABSTRACTS OF JAPAN vol. 2, no. 127 (E-066), 25 October 1978 & JP 53 093393 A (HITACHI LTD), 16 August 1978

## Description

The purpose of this invention is to offer a flexible system for the distribution of electrical power and signals, mainly but not solely relating to the distribution of electricity, electromotive force, electrical signals etc. in ships, aircraft and the like.

In particular, the system in accordance with the invention uses distribution elements consisting of a number of spaced holders, around the perimeter of which electricity transmission conductors and signal transport cables are fitted, all preferably enclosed in extendible sheaths.

The branch elements used consist of sliding casings such as sleeves or the like which are installed round the bundle of bars or cables between two successive holders, and are fitted with contacts which can be positioned as required and/or preferably slide, which said contacts engage the said bars or cables to tap off the power and signals to be sent to the various points of use.

Other advantageous features of the system include its simple, rapid assembly, the possibility of bending the bundle of pipes and cables in situ to adapt it to the topography of the area in which it is to be installed, and its lightness and cheapness.

In the description below, specific reference will be made to the special case of a flexible system designed to distribute electrical power and signals in a ship, but the same system could obviously be used in aircraft, railway carriages and the like.

The reference to the case of a ship is therefore presented by way of example and not of limitation.

Installations designed to distribute electrical power, signals etc. inside a large structure such as a ship are very complex and expensive to make.

In particular a ship is divided into a number of sectors separated by firewalls, each of which has its own main distribution switchboard from which power and signals are sent to a number of service rooms and cabins, each of which has its own secondary distribution board.

For example, in each of these sectors of a ship, a bundle of cables and conductors, contained in a duct that runs through the entire sector, leads from the main distribution switchboard to the distribution board of the first cabin, from there to the board of the second cabin and so on, until signals and energy have been conveyed to every room in the sector. 12 or even 24 cables which perform different functions are often connected to the board of each cabin.

It is necessary to instal cables which supply electricity to the sockets used for appliances such as hairdryers and the like inside cabins and appliances such as vacuum cleaners etc. in cabins and corridors, sockets which supply current for razors and small appliances, sockets for television sets, lamps and other appliances in cabins, and cables that carry signals such as telephone cables, television signal distribution cables, alarm signal cables, data transmission cables and the like.

In accordance with the present state of the art, power and signal distribution installations are constructed manually; the cables, which run through ducts installed in bulkheads and ceilings, are cut to size, the ends stripped, and connected to the various control boards.

This is obviously a very expensive system, as the installation of this distribution network requires a great deal of labour by skilled engineers.

An attempt has been made to solve the problem with the use of bus ducts or busways instead of cables, but to no avail.

Bus ducts consist of a number of rigid box elements of a set length with power supply bars or cables fitted inside them, and are installed by connecting them to one another in situ, with intermediate junction boxes if required.

However, these bus ducts present the major disadvantage that they are rigid and cannot be bent.

The bus duct system was designed to make installations which can be dismantled and refitted rapidly to adapt them to changes in topography, but this possibility of rapidly changing the positions of sockets is of no use in the case of ships and the like, where the installation is permanent; in this case it would be preferable to have power and signal distribution systems which are simpler to make and instal, and above all can easily be bent in order to follow all the routes required to reach the various appliances without difficulty.

LU 36 680 A discloses a flexible system for the distribution of electrical power, comprising a number of spaced holders (1) whereby electricity transmission conductors (6) are fitted into seatings ((2,5) around the perimeter of the said holders.

In order to solve this problem, the present invention offers a flexible power and signal distribution system as defined in claim 1. Preferred embodiments are defined in the dependent claims. The system comprises a number of holders constituted, for example, by discoid elements or the like, with a number of seatings around the perimeter designed to receive all the bars and cables used to carry electrical current and signals from a main switchboard to the control boards present, for example, in each cabin.

These holders, with the bars and cables fitted around the perimeter, will preferably be covered with an extendible sheath.

Branch elements will be incorporated; these elements basically consist of a sleeve or the like which is installed in such a way that it slides over the bundle of bars and cables leading from the main switchboard, and is fitted with a number of contacts that snap onto on the said bars and cables to tap current and signals, which are then sent to the boards in the various cabins.

The fact that these casings or sleeves can slide along the power supply bars between two consecutive holders greatly facilitates wiring to the secondary boards.

The bars and cables are fitted on the corresponding holders in such a way that they can also slide, which means that they can easily be bent but still kept spaced apart.

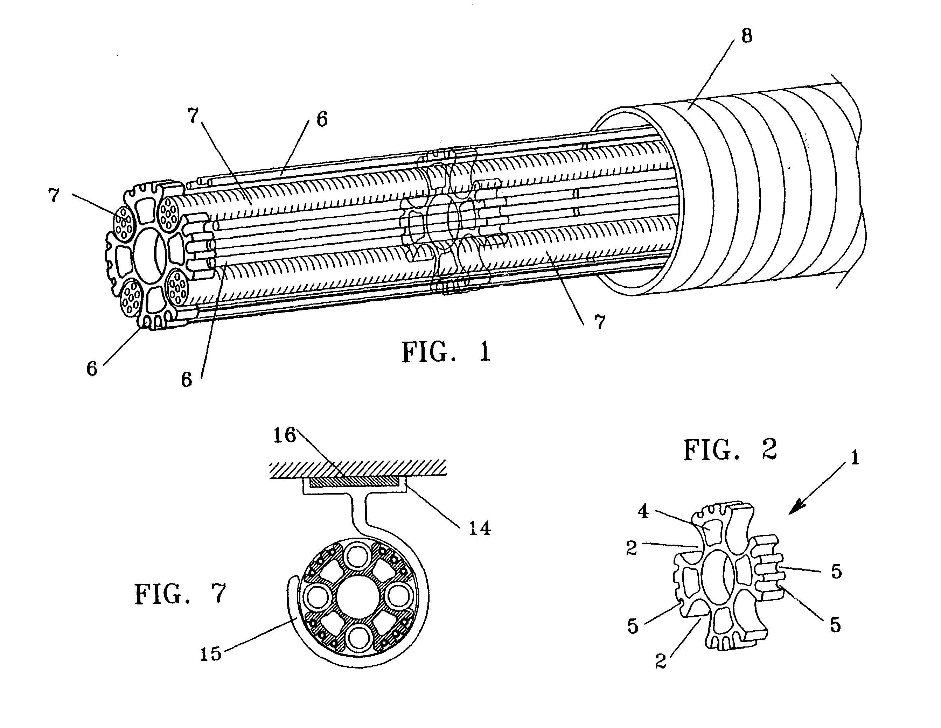

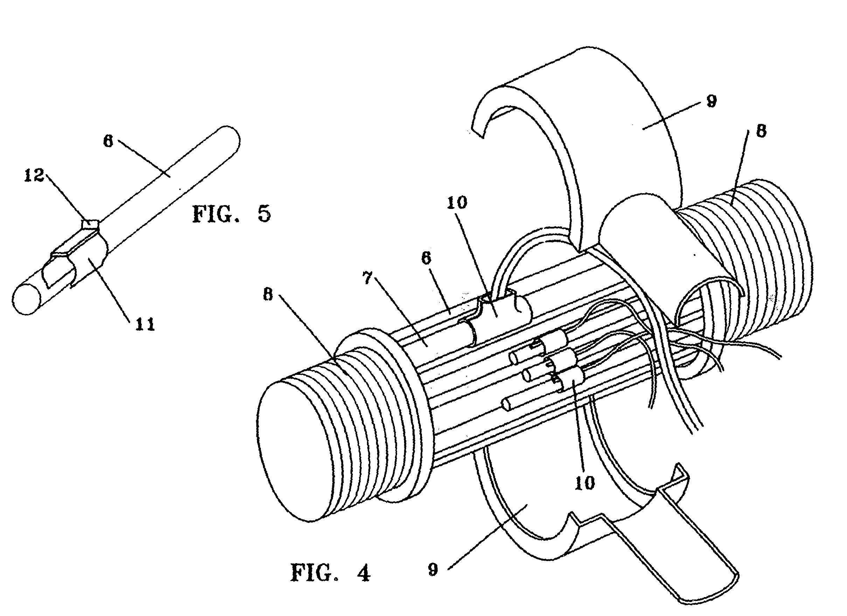

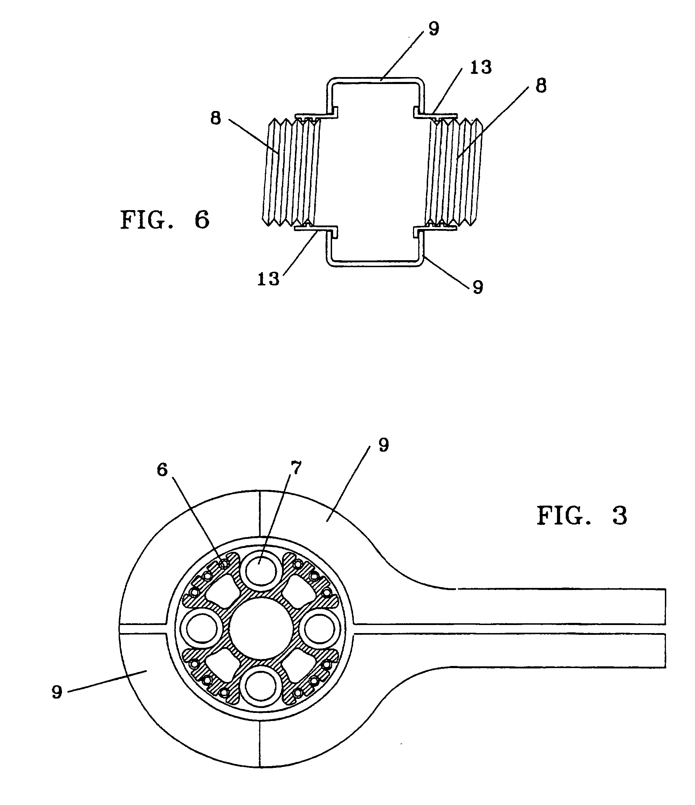

This invention will now be described in detail, by way of example but not of limitation, by reference to the annexed drawings in which:
□ figure 1 schematically illustrates a perspective view of a complex of electrical power and signal distribution bars and cables in accordance with the invention
□ figure 2 is a perspective view of a form of construction of the cable holders in a system in accordance with the invention
□ figure 3 is a cross-section of the distribution complex shown in figure 1 along a plane perpendicular to the cable axis
□ figure 4 shows a perspective view of a branch device in a system in accordance with the invention
□ figure 5 shows a perspective view of a contact usable in a different type of branch device
□ figure 6 shows a detail of the casing of the said branches in cross-section, with the corresponding connection to the protective sheath
□ figure 7 is a cross-section of a complex in accordance with the invention, with an example of a bracket designed for wall or ceiling mounting.

The system in accordance with the invention involves the use of a number of power supply bars and cables fitted around the perimeter of suitably spaced holders to distribute electrical power and signals.

These holders can have different configurations (rounded, polygonal etc.), but a round shape is preferable because it fits more easily into the existing extendible protective sheathing; in addition, being symmetrical in relation to any plane, no problem arises if the bundle has to be bent in any direction.

This possibility of bending the bundle of bars and cables constitutes an outstanding advantage of the system in accordance with the invention.

If its overall diameter is not too large, the bundle could even be rolled up and unrolled, with obvious advantages in the case of installation in ships or places in which access is difficult, for example.

As mentioned, the cables and bars are fitted to holders, one of which is illustrated by way of example in figures 1, 2 and 3.

In figure 3 this holder is shown along a direction parallel to the cables and bars, while in figure 2 it is shown in perspective view.

Figure 1 schematically illustrates a bundle of bars and cables fitted to the corresponding holders, as seen when assembly has been completed.

In figures 2 and 3, no. 1 indicates one of these holders, which basically consists of a flat discoid element shaped to present a set of cavities 2, distributed in an equiangular pattern, which constitute seatings for the housing of electrical signal distribution cables and the like.

Holder 1 is made of insulating material such as teflon, nylon or similar material, and seatings 2 are shaped in such a way that the mouth is slightly narrower than the body of the seating, so that the cables can be snap-fitted into each of these cavities as a result of slight elastic deformation of the material constituting the holder.

For this purpose the sectors or lobes shown as no. 3, which alternate with cavities 2, contain holes 4 which serve the dual purpose of lightening the holder and facilitating its slight deformation when the bars or conductors are inserted.

The outer perimeter of each of the said sectors 3 contains a number of notches 5 of suitable size, each designed to receive a rod, power supply bar or conductor preferably constituted by a tubular element made of suitable material such as copper, or ideally aluminium.

In this case a material such as aluminium or aluminium alloy is preferable because it is cheaper than copper and especially because it is much lighter, which is highly advantageous, especially in the case of installations in ships and aircraft, where weight needs to be minimised.

For example, nickel aluminium alloy conductors could be used because nickel, a highly inert metal, replaces the oxide normally present on the surface of the aluminium, thus producing high-quality contacts.

These power supply rods are indicated as no. 6 in figures 2 and 3.

As already mentioned, notches 5 can be made in different sizes to house different types of bars; for example, rods supplying electricity at the voltage of 220/380V could be positioned in one of sectors 3, 110 volt rods in another sector and rods supplying low-powered current for razors, etc. in another.

This division of holder 1 into sectors, each of which contains notches constituting seatings for a set of bars, enables the various types of conductors to be divided in an orderly manner, thus facilitating assembly of the system still further.

The rods could be painted in different colours to identify the various lines and phases. The colours of the rods will preferably be dark, as it has been demonstrated that dark rods transport current of greater intensity for reasons relating to heat dissipation.

The fact that notches 5 are accessible from the outside means that rods can be added at any time, even after assembly has been completed, so there is no need to complete the entire bundle at the time of commissioning; only the conductors and/or cables actually required need to be installed, while others can be added later as necessary.

As mentioned, cables suitably protected by sheathing, screening, etc. will be inserted in cavities 2; these may be cables with copper conductors or fibre optic cables etc. designed for the transport of signals, such as telephone cables, television signal cables, data transmission cables and information signal transmission cables which connect the various devices in the cabins to the central control systems.

These cables are indicated as no. 7 in the figures.

This complex of conductors, cables and the corresponding holders will be advantageously located inside flexible sheathing of known type, indicated as no. 8 in figures 1 and 5 and made of halogen-free materials.

The sheaths basically consist of a concertina-folded tube with a spiral-shaped fabric or metal stiffening rib running along its perimeter; this ribbing prevents the sheath from being crushed when it is bent, and at the same time acts as a screening element.

Cables 7 and bars 6 can slide to some extent in relation to their holders, thus enabling the bundle to be bent even at angles of 90°, without any crushing at the bends.

These bundles of cables and conductors with their holders can be made in different lengths, ready for assembly; the cables and bars will be fitted with male and female connectors at the ends to allow rapid, easy connection.

It will be sufficient to insert the male connectors into the corresponding female connectors of the adjacent element and tighten them, e.g. with pliers, by crimping or with another known technique.

The system is completed by suitable branch elements which enable power and signals to be tapped from the above-mentioned bundle and conveyed to the boards in each cabin.

A possible form of construction of these elements is illustrated in figure 4.

In particular, these branch elements could comprise a casing designed to fit round the outside of the bundle of cables; the said casing might take the form of a sleeve or a pincer-opening ring-shaped element 9, and will be fitted internally with a number of loose crimp contacts 10, inserted before the sleeve, or sliding contacts such as spring contacts or the like 11, each of which snaps onto a conductor to make the electrical contact when casing 9 closes round the bundle of conductors.

The detail in figure 7 schematically illustrates a possible form of one of these contacts 11, which snaps onto a bar 6 and is fitted with a tab 12 for connection to a cable leading to the cabin board.

Contacts 11 will be distributed over the inner surface of casings 9 in positions corresponding to those of bars 6 and cables 7, so that they snap-fit onto the latter when casing 9 closes round the bundle of conductors.

These branch elements can therefore slide along the bundle of cables between holders 1, a very useful characteristic at the time of installation.

It is no longer necessary to position the branch elements with precision along the bundle of conductors at the time of manufacture; it is sufficient for them to be placed somewhere on the section of the bundle between two holders 1 which will pass near the cabin control board.

At this point, once the bundle of conductors has been installed, it will be sufficient to slide the branch element along the bundle to the exact position of the board, and connect the necessary wiring.

For this purpose, branch element 9 will advantageously be fitted on both sides with suitable connectors for connection to head 13 of extendible outer protective sheath 8, as shown in figure 6.

Fuses not shown in the figures could be fitted to the branch element in the most suitable positions.

The assembly of the distribution system is therefore very simple.

Once the number and type of cables and conductors to be used has been determined, holders 1 are made with a sufficient number of seatings to house all the conductors, which are assembled on the said holders to form bundles of suitable length (e.g. 3-4 metres), or even to form a roll of optimum length (e.g. 10-20 metres) in view of the flexibility of the assembly.

Branch elements can be fitted over this bundle if required on the section between two consecutive holders 1 which will be located near the cabin boards.

If the opening type of branch element is used, they could be installed even after the bundle is laid, simply by fitting them round the conductors and closing them so that spring contacts 10 snap onto the conductors with precision to the nearest millimetre.

At this point it is sufficient to fit protective sheath 8, which constitutes a kind of duct, around the bundle.

A simple system such as wall- or ceiling-mounting brackets, as shown in figure 7, comprising a base 14 with an open ring-shaped element 15 into which the sheath containing the bundle of cables and conductors is inserted, could be used to instal the bundle.

In the case of rooms with metal structures, bases 14 of the brackets could comprise a magnetic fixing element 16. The connection between consecutive bundles is effected simply by inserting the male terminals of one bundle into the female terminals of the next and securing them by crimping or another known system, and then extending protective sheaths 8 until they meet, and joining them by means of known connection systems.

To instal the branch elements it is then sufficient to slide sleeves 9, if they are already fitted round the bundle, or to fit pincer-opening branch elements in a position corresponding with each device served and close them, thus clamping the various contacts onto the matching conductors.

The branch element is thus installed very quickly, as it only needs to be connected to the cabin board.

Extendible sheath 8 will also be attached on both sides to branch element 9, which is fitted on both sides with connectors suitable for this purpose.

The system described is particularly compact as a result of the rational arrangement of the cables, and above all, assembly of the system is greatly accelerated. In practice, the system in accordance with the invention constitutes a complex for the distribution of electrical power and signals which acts both as a duct and as a kind of busway with junction boxes and protective sheath; it is very light, can be inspected along its entire length, and can be expanded or reduced as required in view of the possibility of inserting or removing rods.

The system offers a high level of protection, even against jets of liquid. Finally, in view of its strength and lightness, user devices such as smoke detectors, loudspeakers, light fittings, ceiling light fixtures, emergency exit lights, lamps, etc. can be hung directly onto the bundle.

## Claims

1. Flexible system for the distribution of electrical power and signals, comprising a number of spaced holders (1) whereby a number of signal transmission cables (7) and electricity transmission conductors (6) are fitted into seatings ((2,5) around the perimeter of the said holders.

2. Flexible system in accordance with claim 1, **characterised by** the fact that the said holders (1) are constituted by flat discoid elements made of insulating material.

3. Flexible system in accordance with claim 2, **characterised by** the fact that the said discoid holders (1) contain a number of radial cavities constituting seatings (2) for the same number of cables and, on the outside of the lobes which alternate with the said cable seatings (2), a number of grooves (5) designed to house the same number of conductors (6), the said cable seatings (2) being deeper than the said conductor seatings (5).

4. Flexible system in accordance with claim 2 or 3, **characterised by** the fact that the mouth of the said cable (2) and conductor seatings (5) is slightly narrower than the body of the seatings, so that the said cables (7) and conductors (6) can be snapped into the said seatings.

5. Flexible system in accordance with the preceding claims, **characterised by** the fact that the said conductors (6) are constituted by aluminium bars.

6. Flexible system in accordance with any of the preceding claims, **characterised by** the fact that an extendible sheath (8) covers the said bundle of cables (7) and conductors (6) fitted to the said holders (1).

7. Flexible system in accordance with each of the preceding claims, **characterised by** the fact that it includes branch elements fitted to slide along the said bundle of cables and conductors, the said branch elements being equipped with spring contacts (11) designed to snap onto the said cables and conductors.

8. Flexible system in accordance with claim 7, **characterised by** the fact that the said branch elements are constituted by sleeves (9) designed to fit round the said bundle of cables (7) and conductors (6), contacts (11) designed to snap onto the said cables and conductors being installed on the inside of the said sleeve.

9. Flexible system in accordance with claim 7, **characterised by** the fact that the said branches consist of pincer-opening (9) elements with contacts (10) on the inner surface which are designed to engage the said cables and conductors, the said pincer-opening elements being designed to clamp round the said bundle of cables and conductors.

10. Flexible system in accordance with each of claims 7 to 9, **characterised by** the fact that the said branch elements are fitted at the sides with connectors for the said extendible sheath (8).

11. Flexible system in accordance with each of the preceding claims, **characterised by** the fact that it includes elements designed to attach the sheaths containing the bundle of cables and conductors to a wall or ceiling, the said elements being constituted by an open ring-shaped bracket (15) made of elastically deformable material, integral with a base (14) designed for wall mounting

12. Flexible system in accordance with claim 11, **characterised by** the fact that the said bases (14) contain magnetic elements (16) enabling them to be attached to metal structures.

## Patentansprüche

1. Flexibles System zur Verteilung von Energie und elektrischen Signalen, umfassend eine Mehrheit von voneinander entfernten Halterungen (1), in denen eine Mehrheit von Kabeln (7) zur Übertragung von Signalen und von Leitungen (6) zur Stromübertragung innerhalb von Sitzen (2, 5) montiert sind, die sich am äußeren Rand besagter Halterungen befinden.

2. Flexibles System nach Anspruch 1, charakterisiert durch die Tatsache, dass besagte Halterungen (1) aus flachen scheibenförmigen Elementen aus Isoliermaterial bestehen.

3. Flexibles System nach Anspruch 2, charakterisiert durch die Tatsache, dass besagte scheibenförmige Halterungen (1) eine Mehrheit von radialen Aushöhlungen aufweisen, welche die Sitze (2) für ebenso viele Kabel bilden, und an der Außenseite der sich mit besagten Sitzen (2) für die Kabel abwechselnden Vorsprünge eine Mehrheit von Aushöhlungen (5) enthalten, die für die Aufnahme von ebenso vielen Leitungen (6) geeignet sind; besagte Sitze (2) für die Kabel sind tiefer als besagte Sitze (5) für die Leitungen.

4. Flexibles System nach Ansprüchen 2 oder 3, charakterisiert durch die Tatsache, dass der Eingang der besagten Sitze (2) für besagte Kabel und der besagten Sitze (5) für besagte Leitungen etwas kleinere Ausmaße aufweist als die der Sitze, damit die besagten Kabel (7) und Leitungen (6) beim Montieren einschnappen können.

5. Flexibles System nach den vorherigen Ansprüchen, charakterisiert durch die Tatsache, dass besagte Leitungen (6) aus Aluminiumstäben bestehen.

6. Flexibles System nach jeglichem der vorherigen Ansprüche, charakterisiert durch die Tatsache, dass es einen dehnbaren Mantel (8) vorsieht, um besagtes Bündel von Kabeln (7) und Leitungen (6), die in diesen Halterungen montiert sind, zu umhüllen.

7. Flexibles System nach jeglichem der vorherigen Ansprüche, charakterisiert durch die Tatsache, dass es Ableitungselemente vorsieht, die so auf besagtem Bündel von Kabeln und Leitungen montiert sind, dass sie gleiten können, denn besagte Ableitungselemente sind mit Federkontakten (11) ausgestattet, die geeignet sind, sich an besagte Kabel und Leitungen anzuschließen.

8. Flexibles System nach Anspruch 7, charakterisiert durch die Tatsache, dass besagte Ableitungselemente aus Hülsen (9) bestehen, die geeignet sind, an dieses Bündel von Kabeln (7) und Leitungen (6) angeschlossen zu werden, denn auf der Innenseite der besagten Hülse sind besagte Kontakte (11) montiert, die geeignet sind, sich an besagte Kabel und Leitungen anzuschließen.

9. Flexibles System nach Anspruch 7, charakterisiert durch die Tatsache, dass besagte Ableitungen aus zangenartig zu öffnenden Elementen (9) bestehen, die auf der Innenseite mit Kontakten (10) ausgestattet sind, welche geeignet sind, besagte Kabel und Leitungen anzuschließen, denn besagte zangenartig zu öffnende Elemente sind geeignet, um an besagten Bündeln von Kabeln und Leitungen festgeklemmt zu werden.

10. Flexibles System nach jeglichem der Ansprüche von 7 bis 9, charakterisiert durch die Tatsache, dass besagte Ableitungselemente an den Seiten mit Anschlüssen für den besagten dehnbaren Mantel (8) versehen sind.

11. Flexibles System nach jeglichem der vorherigen Ansprüche, charakterisiert durch die Tatsache, dass es Elemente vorsieht, damit die Mäntel, die das Bündel von Kabeln und Leitungen enthalten, an der Decke oder der Wand angebracht werden können, denn besagte Elemente bestehen aus einem offenen ringförmigen Halter (15) aus elastisch deformierbarem Material, der fest mit einer Basis (14) verbunden ist, die an der Wand befestigt wird.

12. Flexibles System nach Anspruch 11, charakterisiert durch die Tatsache, dass besagte Basen (14) magnetische Elemente (16) enthalten, die ein Befestigen an metallischen Strukturen ermöglichen.

## Revendications

1. Système flexible de distribution d'énergie et de signaux électriques, comprenant plusieurs supports distanciés (1) à travers lesquels plusieurs câbles (7) de transmission des signaux et de conducteurs (6) de transport d'électricité sont montés sur des logements (2,5) situés sur le périmètre desdits supports.

2. Système flexible selon la revendication 1) **caractérisé par le fait que** lesdits supports (1) sont constitués d'éléments discoïdaux plats en matériau isolant.

3. Système flexible selon la revendication 2), **caractérisé par le fait que** lesdits supports discoïdaux (1) présentent plusieurs évidements radiaux qui constituent les logements (2) d'un nombre de câbles correspondant et, sur la partie externe des lobes qui alternent avec lesdits logements (2) de câbles, plusieurs évidements (5) en mesure de loger un nombre correspondant de conducteurs (6), sachant que lesdits logements (2) de câbles sont plus profonds que lesdits logements (5) de conducteurs.

4. Système flexible selon les revendications 2) ou 3) **caractérisé par le fait que** l'entrée desdits logements (2) desdits câbles et desdits logements (5) pour lesdits conducteurs est de taille légèrement inférieure à celle des logements, de façon à permettre le montage par pression desdits câbles (7) et conducteurs (6).

5. Système flexible selon les revendications précédentes **caractérisé par le fait que** lesdits conducteurs (6) sont constitués de barres d'aluminium.

6. Système flexible selon une des revendications précédentes **caractérisé par le fait qu'**il prévoit une gaine extensible (8) pour recouvrir ledit faisceau de câbles (7) et de conducteurs (6) montés sur lesdits supports (1).

7. Système flexible selon toutes les revendications précédentes **caractérisé par le fait qu'**il prévoit des éléments de dérivation montés de façon coulissante sur ledit faisceau de câbles et de conducteurs, sachant que lesdits éléments de dérivation sont dotés de contacts à ressort (11) en mesure d'être insérés sur lesdits câbles et conducteurs.

8. Système flexible selon la revendication 7) **caractérisé par le fait que** lesdits éléments de dérivation sont constitués de manchons (9) en mesure d'être insérés autour dudit faisceau de câbles (7) et de conducteurs (6), sachant que lesdits contacts (11) en mesure d'être insérés sur lesdits câbles et conducteurs sont montés sur la partie interne dudit manchon.

9. Système flexible selon la revendication 7) **caractérisé par le fait que** lesdites dérivations sont constituées d'éléments à ouverture à pince (9) dotés, sur la surface interne, de contacts (10) en mesure de retenir lesdits câbles et conducteurs, sachant que lesdits éléments à ouverture à pince peuvent être serrés autour desdits faisceaux de câbles et de conducteurs.

10. Système flexible selon les revendications de 7) à 9) **caractérisé par le fait que** lesdits éléments de dérivation sont dotés, sur les côtés, d'attaches pour ladite gaine extensible (8).

11. Système flexible selon toutes les revendications précédentes **caractérisé par le fait qu'**il prévoit des éléments pour l'application au plafond ou au mur des gaines contenant le faisceau de câbles et de conducteurs, sachant que lesdits éléments sont constitués d'un support à anneau ouvert (15) en matière élastiquement déformable, fixé à une base (14) qui doit être fixée au mur.

12. Système flexible selon la revendication 11) **caractérisé par le fait que** lesdites bases (14) contiennent des éléments magnétiques (16) permettant de les fixer sur des structures métalliques.
